# EUROPEAN PATENT APPLICATION

(11) **EP 2 295 221 A1**
(43) Date of publication of application: **16.03.2011**
(21) Application number: 10183017.2
(22) Date of filing: 04.09.2003
(51) Int. Cl.: B29C 47/06, B29C 47/92, B29C 49/04, B29C 49/22, B29C 49/78, B65D 1/02, B29B 11/10

(54) **Method of manufacturing a laminated and molded body**

(30) Priority: 05.09.2002 JP 2002260083
(62) Divisional of application: 03794238.0
(71) Applicant: Yoshino Kogyosho Co., Ltd., Tokyo 136-8531 (JP)
(72) Inventor: Akiyama, Yoshio, Tochigi-shi Tochigi 328-0125 (JP); Ishiyama, Shinichi, Tochigi-shi Tochigi 328-0125 (JP)
(74) Representative: Gray, James

(57) **Abstract**

A method of manufacturing a laminated and molded body by coextrusion of at least two layers of different kind of resin materials, said method comprising the steps of:
extruding a colored layer (2) as at least one of said layers of the laminated and molded body, and
controlling an extruding amount of the resin material of said colored layer (2) such that said colored layer (2) has a thickness continuously or intermittently varied in a predetermined direction with respect to the extruding direction of the resin material of said colored layer (2),
characterised in that the amount of the resin material of said colored layer (2) is controlled so that the thickness of the colored layer (2) varies within a range of 50% of the full thickness of said laminated and molded body.

## Description

### BACKGROUND ART

### Technical Field

The present invention relates to a laminated and molded body such as a blow-molding aimed preform and a direct-blow molded bottle which are duly obtained by using a plurality of kinds of synthetic resins as materials and by coextruding them, and intends to bring about a variation of the color tone of the laminated and molded body to thereby further improve the aesthetic appearance thereof. The present invention further relates to a manufacturing method for manufacturing such a laminated and molded body.

### Related Art

As containers made of synthetic resin for accommodating cosmetics or the like therein, there have been numerously used molded articles such as obtained by injection molding or blow molding synthetic resins, from a standpoint to attain a suitable mass-production and a reduced manufacturing cost. However, most of such molded articles are monotonous or have color tones of less variation, thereby resulting in a still insufficient aesthetic appearance of containers.

Thus, as described in JP-A-2000-117820, for example, it has been recently proposed to adopt such a technique to attain a variation of color deepness to be given to a container, for achieving a so-called gradation effect to thereby enhance the decorative effect of the container.

The technique described in the above publication is to previously provide a parison with a wall thickness difference at the time of injecting a translucent colored resin, and then blow molding the parison, to thereby cause the parison to have a partially different wall thickness. According to this technique, it has been believed to be able to attain a pattern based on a color deepness without requiring any specific process and able to restrict the manufacturing cost to a lower degree.

However, the above-mentioned related art still has problems which should be further improved, because the parison itself is provided with the wall thickness difference and thus the blow molded article also has the same wall thickness distribution as the parison, thereby complicating the wall thickness control upon blow molding, because those particularly thin portions of the container have a so lowered rigidity that the strength of the container is affected and that entrance of a gas (such as oxygen) from the exterior into the container becomes easy, thereby leading to an anxiety about a shortened quality assurance period for the contents accommodated within the container, because it is difficult to stably obtain molded articles having an excellent quality, and because the wall thickness of the dense color portion of the container is made to have a greater wall thickness than required to thereby lead to an increased cost when it is contemplated to preserve the rigidity of the whole container.

### DISCLOSURE OF THE INVENTION

It is therefore an object of the present invention to propose a novel laminated and molded body and a manufacturing method therefor capable of solving the above-mentioned problems in the related art.

The present invention provides a laminated and molded body obtained by coextruding and molding at least two kinds of resin materials, characterised in that
at least one layer of the laminated and molded body comprises a colored layer having a thickness continuously or intermittently varied in a predetermined direction with respect to the extruding direction of the resin material of the colored layer (for example, in a direction parallel to the extruding direction and/or in another direction intersecting the extruding direction).

Further, the present invention provides a manufacturing method of a laminated and molded body to be formed by coextruding at least two kinds of resin materials, characterised in that
the method comprises the steps of:
extruding a colored layer as at least one layer of the laminated and molded body, and

controlling an extruding amount of the resin material of the colored layer such that the colored layer has a thickness continuously or intermittently varied in a predetermined direction with respect to the extruding direction of the resin material of the colored layer (for example, in a direction parallel to the extruding direction and/or in another direction intersecting the extruding direction).

According to the present invention, it becomes possible to easily and assuredly obtain a laminated and molded body having an improved aesthetic appearance, by adjusting the supplying amount of the resin material forming the colored layer upon coextrusion. Further, the thickness of the resin material constituting the colored layer is continuously or intermittently varied along the predetermined direction, thereby allowing exhibiting such a visual effect, i.e., a so-called gradation effect that the color deepness of the colored layer is continuously or intermittently varied in the predetermined direction. For example, when the thickness of the resin material constituting the colored layer is varied in a direction parallel to the extruding direction, the color deepness of the colored layer is varied in the direction parallel to the extruding direction. Alternatively, when the thickness of the resin material constituting the colored layer is varied in a direction intersecting the extruding direction, the color deepness of the colored layer is varied in the direction intersecting the extruding direction.

It is desirable that the full thickness of the laminated and molded body is substantially uniform along the predetermined direction with respect to the extruding direction of the resin material. Namely, it is desirable to control an extruding amount of the resin material of at least one layer other than the colored layer, such that the full thickness of the laminated and molded body is substantially constant along the predetermined direction. In this case, the full thickness of the laminated and molded body is substantially uniform over the whole of the laminated and molded body even when the thickness of the colored layer is varied. Thus, there is never caused locally increased or decreased wall thickness, thereby enabling to obtain a molded article having a quality stabilized in terms of strength and to provide a laminated and molded body having an enhanced gradation effect with a restricted cost.

In the laminated and molded body having the above constitution, it is desirable that the colored layer has a thickness varied within a range of 50% of the full thickness of the laminated and molded body.

The laminated and molded body according to the present invention is advantageously applicable to a body portion of a container such as: a blow-molding aimed preform to be used upon biaxial-stretching blow molding; a direct-blow molded bottle or direct-blow molded tube to be obtained by direct-blow molding a coextruded parison; and a tube.

### BRIEF DESCRIPTION OF THE DRAWINGS

The present invention will be described hereinafter more in detail with reference to the embodiments shown in the accompanying drawings.
FIG. 1 is an explanatory constitutional view of a laminated and molded body according to an embodiment of the present invention.
FIG. 2 is an enlarged cross-sectional view of an essential part of the molded body shown in FIG. 1.
FIG. 3 through FIG. 7 are enlarged views of essential parts for explaining laminated structures in other embodiments of the present invention.
FIG. 8 is an explanatory constitutional view of a laminated and molded body according to a further embodiment of the present invention.
FIG. 9 is an enlarged cross-sectional view showing an essential part of the molded body shown in FIG. 8, in a developed state.
FIG. 10 is an explanatory constitutional view of a laminated and molded body according to a still further embodiment of the present invention.

### BEST MODE FOR CARRYING OUT THE INVENTION

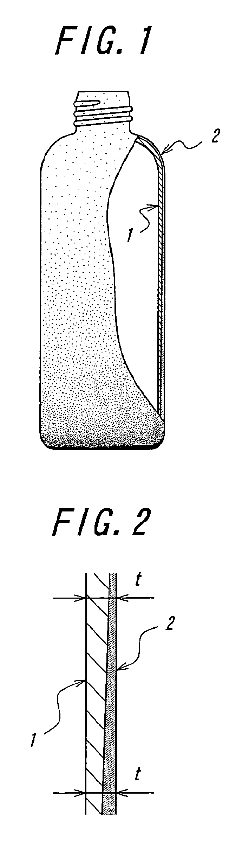

FIG. 1 exemplarily shows a blow molded article in a shape of dual-layered bottle-type container according to an embodiment of the present invention, wherein reference numeral 1 designates a main body portion as an inner layer, and reference numeral 2 designates a colored layer arranged outside and integrally with the main body portion 1. The colored layer 2 has a thickness increased from a mouth portion of the molded article toward a bottom portion thereof, thereby gradually increasing the color density. Note, the main body portion 1 as the inner layer has a thickness reduced from the mouth portion of the molded article toward the bottom portion thereof, thereby achieving a substantially constant thickness "t" over the whole of the laminated and molded body.

The molded article shown in FIG. 1 is constituted as the container having an improved gradation effect provided by a color tone gradually deepened in a direction parallel to the extruding direction of the molded article, i.e., from the mouth portion toward the bottom portion, thereby remarkably improving the aesthetic appearance of the container.

In molding such a container, it is possible to use a multi-layer coextrusion die of a type for simultaneously merging different resin materials or a type for sequentially merging them.

In this respect, it is possible to adjust the color deepness in a laminated and molded body, by appropriately controlling an extruding amount of a resin constituting the colored layer. Naturally, the thicker the colored layer, the deeper the color, and vice versa. In case of the container of FIG. 1 the essential part of which is enlargedly shown in FIG. 2, the colored layer 2 has a wall thickness distribution gradually reducing from the bottom portion toward the mouth portion, while the main body portion 1 as the inner layer has a wall thickness distribution gradually increasing from the bottom portion toward the mouth portion.

Upon coextrusion, the thickness of the colored layer 2 is appropriately varied by controlling the extruding amount of resin material, and the thickness of the main body portion 1 neighboring to the colored layer 2 is also varied correspondingly thereto. Thus, the full thickness of the laminated and molded body is kept substantially constant over the whole of the laminated and molded body, thereby never causing such portions having extremely reduced or increased thicknesses, except for wall thickness changes due to the product shape.

As materials for constituting the laminated and molded body, it is possible to use: an olefin-based resin such as polyethylene resin or polypropylene resin; and a polyester resin such as a polyethylene terephthalate resin (PET); and it is possible to use an ethylene vinyl alcohol 1 copolymer (EVOH), nylon or the like, as a barrier resin.

The laminated and molded body having the above structure can be molded, by adopting a molding apparatus having a flow passage for supplying a resin material corresponding to the main body portion 1 as the inner layer and another flow passage for supplying a resin material corresponding to the colored layer 2 arranged outside and integrally with the main body portion 1, and by coextruding these resin materials.

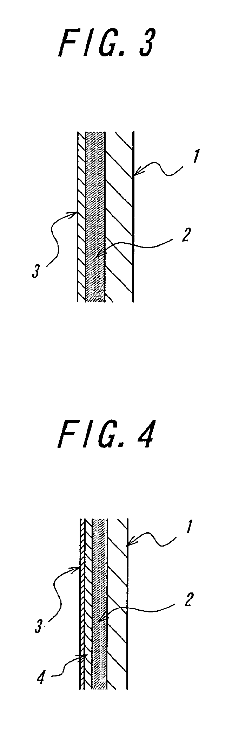

There will be explained hereinafter laminated and molded bodies according to the other embodiments shown in FIG. 3 through FIG. 7.

As shown in FIG. 3, the laminated and molded body according to another embodiment of the present invention is allowed to be provided with a frosting layer 3 comprising a glossy material or frosted material outside the colored layer 2, thereby making it possible to provide variations of not only a color deepness but also a color tone.

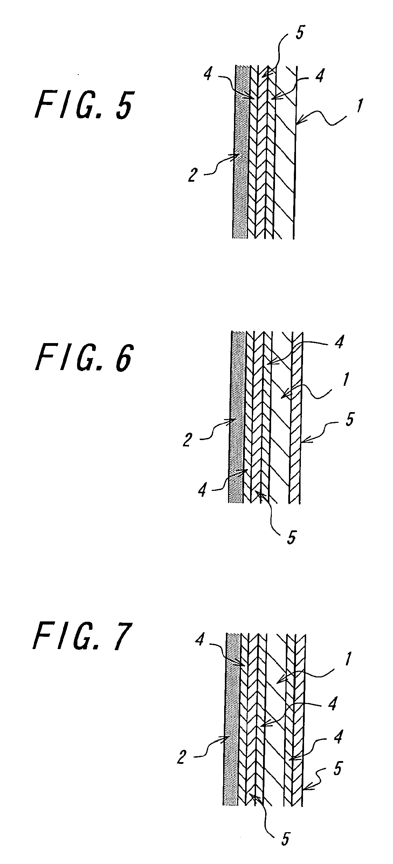

Further, as exemplarily shown in FIG. 4 through FIG. 7, each of the laminated and molded bodies according to the present invention can be provided as an appropriate combination of: an adhering layer; and a barrier layer such as comprising EVOH or comprising meta-xylylene-group containing polyamide, for restricting permeation of oxygen. Namely, in a further embodiment of FIG. 4, there is arranged an adhering layer 4 between the colored layer 2 and frosting layer 3 in the embodiment of FIG. 3. In a still another embodiment of FIG. 5, there are successively arranged an adhering layer 4, a barrier layer 5 and another adhering layer 4, between the main body portion 1 as an inner layer and the colored layer 2 in the embodiments of FIG. 1 and FIG. 2. In a still further embodiment of FIG. 6, there is arranged another barrier layer 5 also inside the main body portion 1 as an inner layer in the embodiment of FIG. 5. Further, in yet another embodiment of FIG. 7, there is also arranged another adhering layer 4 between the main body portion 1 and the barrier layer 5 inside it in the embodiment of FIG. 6. Moreover, it is also possible to provide a layer including a known oxygen absorbent. Depending on the usage, the constitution of the layers can be appropriately modified in a manner different from the above, and no limitations are particularly imposed in this respect.

It is desirable that the thickness of the colored layer is varied within a range of 50% of the full thickness of the laminated and molded body. The reason therefor is the wall thickness variability and the external appearance of the colored layer. In addition to the provision of the gradation effect for the molded body based on the wall thickness variation of the colored layer, it is also possible to constitute the molded body by also providing the main body portion with another gradation effect.

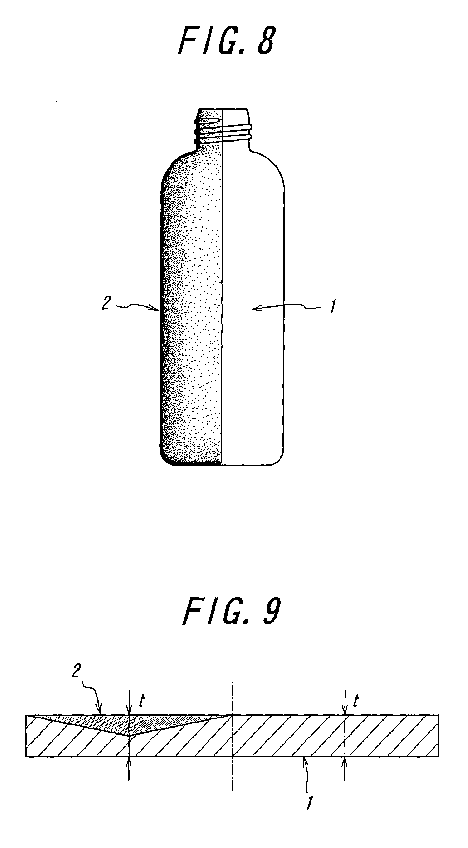

FIG. 8 and FIG. 9 exemplarily show a blow molded article in a shape of a dual-layered bottle-type container according to a yet further embodiment of the present invention, wherein the same reference numerals used in FIG. 1 and FIG. 2 are to denote identical or corresponding constituent elements. In this embodiment, the main body portion 1 is provided with the colored layer 2 only over a half of a circumference of the main body portion 1 in its circumferential direction, and is not provided with the colored layer 2 over the remaining half of the circumference. The colored layer 2 is arranged outside and integrally with the main body portion 1. As shown in FIG. 9, the thickness of the colored layer 2 is gradually increased from its one end portion toward its central portion, and is gradually reduced from its central portion toward its other end portion. Thus, the colored layer 2 exhibits such a circumferential gradation effect that the color tone is deepened from the one end portion toward the central portion and is lightened from the central portion toward the other end portion.

Note, the laminated and molded body shown in FIG. 8 and FIG. 9 can be molded, such as by adopting a substantially crescent shape of a cross section of the flow passage at a portion for merging the resin material corresponding to the main body portion 1 as the inner layer with the resin material corresponding to the colored layer 2. Meanwhile, if there is provided appropriate controlling means for increasing/decreasing the sectional area of the flow passage at the merging portion in a timewise manner, it becomes possible to appropriately increase/decrease the thickness of the colored layer 2 not only in a direction intersecting the extruding direction but also in a direction parallel to the extruding direction, thereby making it possible to embody various gradation patterns.

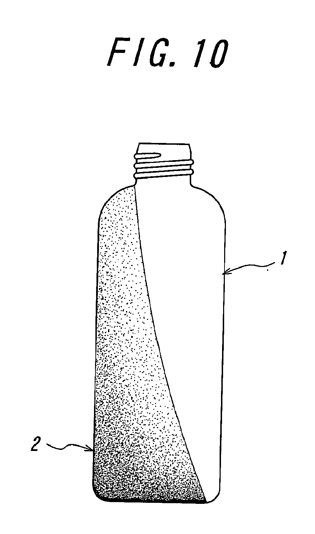

FIG. 10 shows another embodiment of the present invention in which the thickness of the colored layer 2 is increased and decreased in two directions consisting of a direction intersecting the extruding direction and another direction parallel to the extruding direction.

As apparent from the above and according to the present invention, it becomes possible to easily and assuredly obtain a laminated and molded body having an improved aesthetic appearance, only by adjusting the supplying amount of the resin material forming the colored layer upon coextrusion. Further, the full thickness "t" of the laminated and molded body is kept substantially constant over the whole of the laminated and molded body even when the thickness of the colored layer is varied. Thus, there is never caused locally increased or decreased wall thickness, thereby making it possible to obtain a molded article having a quality stabilized in terms of strength and to provide a laminated and molded body having an enhanced gradation effect with a restricted cost.

Although the present invention has been explained with reference to the preferred embodiments, it is apparent that the present invention can be performed in various configurations other than the above, without departing from the scope of the present invention.

## Claims

1. A method of manufacturing a laminated and molded body by coextrusion of at least two layers of different kind of resin materials, said method comprising the steps of:
extruding a colored layer as at least one of said layers of the laminated and molded body, and
controlling an extruding amount of the resin material of said colored layer such that said colored layer has a thickness continuously or intermittently varied in a predetermined direction with respect to the extruding direction of the resin material of said colored layer,
**characterised in that** the amount of the resin material of said colored layer is controlled so that the thickness of the colored layer varies within a range of 50% of the full thickness of said laminated and molded body.

2. The manufacturing method of claim 1, **characterised in that** the amount of the resin material of said colored layer is controlled so that the full thickness of said laminated and molded body is substantially constant along said predetermined direction.

3. The manufacturing method of claim 1, **characterised in that** the predetermined direction is a direction parallel to the extruding direction of said at least one layer of said laminated and molded body.

4. The manufacturing method of claim 1, wherein the predetermined direction is a direction intersecting the extruding direction of said at least one layer of said laminated and molded body.

5. The manufacturing method of claim 1, **characterised in that** the predetermined direction comprises a direction parallel to the extruding direction of said at least one layer of said laminated and molded body and another direction intersecting the extruding direction.

6. The manufacturing method of any one of claims 1 to 5, **characterised in that** said laminated and molded body is any one of a blow-molding aimed preform, a direct-blow molded bottle, a tube, or a blow molded tube.
